# EUROPÄISCHE PATENTSCHRIFT

(11) **EP 2 660 572 B1**
(45) Veröffentlichungstag und Bekanntmachung des Hinweises auf die Patenterteilung: **15.03.2023**
(21) Anmeldenummer: 13165058.2
(22) Anmeldetag: 24.04.2013
(51) Int. Cl.: G01G 23/37, G09G 5/14, G01G 23/01, G01G 19/414

(54) **Verfahren zur Darstellung von Inhaltselementen auf einer Anzeigeeinrichtung einer Waage**
Method for representing content elements on a display device of a weighing apparatus
Procédé de représentation d'éléments de contenu sur un dispositif d'affichage d'une balance

(30) Priorität: 30.04.2012 DE 102012207212
(43) Veröffentlichungstag der Anmeldung: 06.11.2013
(73) Patentinhaber: Bizerba SE & Co. KG, 72336 Balingen (DE)
(72) Erfinder: Leu, Martin, Dr., 72336 Balingen (DE)
(74) Vertreter: Manitz Finsterwald Patent- und Rechtsanwaltspartnerschaft mbB

(56) Entgegenhaltungen:
- WO-A1-02/18887
- DE-B3-102008 008 048

## Beschreibung

Die vorliegende Erfindung betrifft ein Verfahren zur Darstellung von Inhaltselementen in zugeordneten Anzeigefenstern auf einer Anzeigeeinrichtung einer Waage, insbesondere einer Ladenwaage.

Ein derartiges Verfahren ist aus dem Dokument WO 02/18887 A1 bekannt. Die Wägedaten werden innerhalb eines von dem Betriebssystem zur Verfügung gestellten Anzeigefensters angezeigt, dem eine feste Größe und Position zugeordnet und mit Hilfe des Betriebssystems die Eigenschaft verliehen wird, dass es sich immer im Vordergrund befindet. Auf weiteren von einem frei programmierbaren Programmteil erzeugten Fenstern können weitere Informationsinhalte dargestellt werden.

Das Dokument DE 10 2008 008 048 B3 offenbart ein Verfahren zur Darstellung von Inhaltselementen, bei dem ein Graphikelement auf mehreren Anzeigevorrichtungen, die unterschiedliche Geräteparameter aufweisen, an derselben Stelle und mit denselben Abmessungen dargestellt wird.

Wie in vielen anderen Bereichen kann auch bei der Herstellung von Waagen eine jeweilige Teilkomponente der Waagen von mehreren verschiedenen Herstellern bezogen werden, um die mit einem Multiple Sourcing verbundenen Vorteile wie Sicherheit gegen Lieferschwierigkeiten oder größere Flexibilität bei Bedarfsschwankungen zu nutzen. Dies gilt insbesondere auch für die Teilkomponente Anzeigeeinrichtung bzw. Display der Waage.

Dabei ist es möglich, dass sich die unterschiedlichen Anzeigeeinrichtungen in Größe und/oder Format voneinander unterscheiden. Selbst wenn die unterschiedlichen Anzeigeeinrichtungen spezifikationsgemäß an sich die gleichen technischen Daten (z.B. Größe, Format) besitzen, können sich insbesondere deren Anzeigeflächen geringfügig voneinander unterscheiden. Hieraus folgt, dass ein Inhaltselement, beispielsweise ein Bild, das auf einer Anzeigeeinrichtung mit einem ersten Seitenverhältnis korrekt dargestellt wird, auf einer Anzeigeeinrichtung mit einem hiervon abweichenden zweiten Seitenverhältnis verzerrt dargestellt wird.

Eine derartige Verzerrung des auf der Anzeigeeinrichtung anzuzeigenden Inhalts soll insbesondere bei eichfähigen Waagen, die gewissen Beschränkungen hinsichtlich der Darstellung der eichfähigen Daten wie Gewicht und Preis unterliegen, jedoch möglichst vermieden werden.

Der Erfindung liegt daher die Aufgabe zugrunde, diesen Nachteil zu vermeiden.

Diese Aufgabe wird durch ein Verfahren der eingangs genannten Art gelöst, und insbesondere dadurch, dass die Darstellung der Inhaltselemente auf der Anzeigeeinrichtung beeinflussende Hardware-Parameter der Anzeigeeinrichtung ausgelesen werden, auf wenigstens ein zu einem jeweiligen Zeitpunkt in einem jeweiligen Anzeigefenster auf der Anzeigeeinrichtung darzustellendes Inhaltselement, dem eine jeweilige, die jeweilige Darstellung zumindest teilweise vorgebende Zusatzinformation zugeordnet ist, zugegriffen wird, und basierend auf den Hardware-Parametern und der jeweiligen Zusatzinformation unter der Maßgabe einer verzerrungsfreien bzw. winkeltreuen Darstellung des jeweiligen Inhaltselements auf der Anzeigeeinrichtung die absoluten Abmessungen und optional die Position des dem jeweiligen darzustellenden Inhaltselements zugeordneten Anzeigefensters automatisch berechnet werden.

Das erfindungsgemäße Verfahren erlaubt eine winkeltreue Darstellung des jeweiligen Inhaltselements auf der Anzeigeeinrichtung, d.h. das jeweilige Inhaltselement kann immer verzerrungsfrei dargestellt werden, auch wenn eine andere Anzeigeeinrichtung verwendet wird. Winkel bleiben gleich. Es wird ermöglicht, die absoluten Abmessungen und ggf. die Position des wenigstens einen Anzeigefensters derart zu berechnen, dass der durch das bzw. die Anzeigefenster belegte Anteil der Anzeigefläche der Anzeigeeinrichtung unter Berücksichtigung der Zusatzinformation bzw. Zusatzinformationen maximiert, d.h. optimal genutzt wird. Das erfindungsgemäße Verfahren kann durch einen Screen-Editor, der als Software-Modul vorliegen kann, durchgeführt werden.

Unter den absoluten Abmessungen des jeweiligen Anzeigefensters ist die Länge der Seiten des jeweiligen Anzeigefensters, d.h. die tatsächliche Ausdehnung des jeweiligen Anzeigefensters auf der Anzeigeeinrichtung, zu verstehen. Die Hardware-Parameter können aus der Anzeigeeinrichtung ausgelesen werden, oder aus einem Speicher der die Anzeigeeinrichtung aufweisenden Vorrichtung, insbesondere der Waage, in dem die Hardware-Parameter der Anzeigeeinrichtung hinterlegt sind. Eine verzerrungsfreie Darstellung bedeutet insbesondere, dass gegenüber einer als korrekt definierten Darstellung zumindest im Wesentlichen keine Verzerrung auftritt. Die jeweilige Zusatzinformation kann dem jeweiligen Inhaltselement auch mittelbar über das jeweilige zugeordnete Anzeigefenster zugeordnet sein.

Bei den Hardware-Parametern, die die Darstellung der Inhaltselemente beeinflussen, handelt es sich insbesondere um die Größe, das Seitenverhältnis, die Auflösung, die Pixelzahl, die Anzahl der Spalten und/oder die Anzahl der Zeilen der Anzeigeeinrichtung.

Bei den darzustellenden Inhaltselementen kann es sich um eichpflichtige Daten wie Gewicht und Preis, Textinhalte und/oder Bildinhalte handeln, wobei unter einem Bildinhalt nicht nur ein einzelnes Bild verstanden werden soll, sondern auch eine Aneinanderreihung von Bildern, beispielsweise ein Video. Die Inhaltselemente können demnach in verschiedene Klassen im Sinne einer Klassifizierung eingeteilt werden. Grundsätzlich können Videos auch einer von Bildern separaten Klasse zugeordnet werden.

Die Inhaltselemente zumindest einiger Klassen, beispielsweise Textinhalte und/oder Bildinhalte, können als Dateien vorliegen. Zur Darstellung dieser Inhaltselemente wird dann auf die jeweilige Datei zugegriffen. Eichpflichtige Daten werden bei einem jeweiligen Wägevorgang erzeugt und als jeweiliges Wägeergebnis üblicherweise in einer Datei abgelegt. Vorzugsweise werden der Darstellung der eichpflichtigen Daten in dem zugeordneten Anzeigefenster die unmittelbar erzeugten Wägeergebnisse zugrunde gelegt. Grundsätzlich kann hierzu jedoch auch auf die Datei, in der das jeweilige Wägeergebnis gespeichert ist, zugegriffen werden.

Bevorzugt umfasst die jeweilige Zusatzinformation zumindest eines der Attribute Mindestgröße des zugeordneten Anzeigefensters, Seitenverhältnis des zugeordneten Anzeigefensters und/oder relevanter Bildbereich des Inhaltselements. Insbesondere umfassen die Zusatzinformationen der Inhaltselemente einer jeweiligen Klasse gleiche Attribute. Beispielsweise kann für eichpflichtige Daten eine bestimmte Mindestgröße und/oder ein bestimmtes Seitenverhältnis des zugeordneten Anzeigefensters vorgegeben sein, für Textinhalte ein bestimmtes Seitenverhältnis des zugeordneten Anzeigefensters und für Bilddaten ein relevanter Bildbereich des Inhaltselements. Bei dem relevanten Bildbereich kann es sich um einen Kernbereich oder einen Randbereich eines Bilds handeln.

Insbesondere besitzt ein relevanter Bildbereich eines Bildinhalts weniger Bildpunkte und/oder ein anderes Seitenverhältnis als der gesamte Bildbereich des Bildinhalts, wobei bevorzugt zumindest der relevante Bildbereich in dem zugeordneten Anzeigefenster dargestellt wird. Um den relevanten Bildbereich zu erzeugen, kann der gesamte Bildbereich randseitig, insbesondere von links, recht, oben und/oder unten, zugeschnitten werden.

Auf der Anzeigeeinrichtung kann zu einem bestimmten Zeitpunkt lediglich ein Inhaltselement dargestellt werden, z.B. ein Bildinhalt, insbesondere dann, wenn gerade kein Wägevorgang durchgeführt wird. Zu anderen Zeitpunkten können jedoch auch mehrere Inhaltselemente in ihren jeweiligen Anzeigefenstern gleichzeitig auf der Anzeigeeinrichtung dargestellt werden. Beispielsweise können auf der Anzeigeeinrichtung gleichzeitig bzw. miteinander ein Eichfenster, ein Textfenster und ein Bildfenster dargestellt werden.

Die Zusatzinformationen können manuell, beispielsweise mittels eines Editors, eingegeben und/oder automatisch ermittelt werden. Die automatische Ermittlung der Zusatzinformation kann hinsichtlich eines Bildinhalts durch eine Bilderkennung erfolgen. Beispielsweise können bei einer Analyse des Bildes, insbesondere von außen nach innen, Kanten oder Kontraste detektiert werden, aus denen auf im Randbereich des Bildes liegende, nicht relevante Bildbestandteile geschlossen werden kann.

Die jeweilige Zusatzinformation kann in einer Datenbank, in einer dem Inhaltselement entsprechenden Datei, insbesondere als Metadaten, oder in einem Dateinamen einer dem Inhaltselement entsprechenden Datei hinterlegt sein. Z.B. kann eine Zusatzinformation, die einem eichpflichten Inhalt zugeordnet ist, z.B. eine Mindestgröße des Eichfensters und/oder ein vorgegebenes Seitenverhältnis des Eichfensters, in einer Datenbank hinterlegt sein. Die Zusatzinformationen von alternativ und/oder zusätzlich zu dem Eichfenster darzustellenden Inhalten, beispielsweise Textinhalten oder Bildinhalten, können in der jeweiligen Datei bzw. dem jeweiligen Dateinamen gespeichert sein.

Bei mehreren zu einem jeweiligen Zeitpunkt gleichzeitig darzustellenden Inhaltselementen kann eine manuelle Anordnung der den Inhaltselementen zugeordneten Anzeigefenster relativ zueinander vorgenommen wird. Beispielsweise kann vorgegeben werden, dass ein Eichfenster bzw. Eichfeld links oben in der Anzeigeeinrichtung, ein Textfeld darunter und ein Bildfeld im rechten Bereich der Anzeigeeinrichtung dargestellt werden soll.

Weiter Gegenstand der vorliegenden Erfindung ist ein Computerprogramm mit Programmcode-Mitteln, um das vorstehend erläuterte Verfahren durchzuführen, wenn das Programm auf einem Computer, insbesondere einer Waage, ausgeführt wird.

Außerdem ist Gegenstand der vorliegenden Erfindung ein Computerprogrammprodukt mit Programmcode-Mitteln, die auf einem computerlesbaren Datenträger gespeichert sind, um das vorstehend erläuterte Verfahren durchzuführen, wenn das Programm auf einem Computer, insbesondere einer Waage, ausgeführt wird.

Darüber hinaus betrifft die vorliegende Erfindung eine Vorrichtung, insbesondere eine Waage, insbesondere eine Ladenwaage, zur Darstellung von Inhaltselementen in zugeordneten Anzeigefenstern auf einer Anzeigeeinrichtung der Vorrichtung, insbesondere der Waage, die dazu ausgelegt ist, die Darstellung der Inhaltselemente auf der Anzeigeeinrichtung beeinflussende Hardware-Parameter der Anzeigeeinrichtung auszulesen, auf wenigstens ein zu einem jeweiligen Zeitpunkt in einem jeweiligen Anzeigefenster auf der Anzeigeeinrichtung darzustellendes Inhaltselement, dem eine jeweilige, die jeweilige Darstellung zumindest teilweise vorgebende Zusatzinformation zugeordnet ist, zuzugreifen, und basierend auf den Hardware-Parametern und der jeweiligen Zusatzinformation unter der Maßgabe einer verzerrungsfreien Darstellung des jeweiligen Inhaltselements auf der Anzeigeeinrichtung die absoluten Abmessungen und optional die Position des dem jeweiligen darzustellenden Inhaltselements zugeordneten Anzeigefensters automatisch zu berechnen.

Vorteilhafte Ausführungsformen der erfindungsgemäßen Vorrichtung, insbesondere Waage, ergeben sich in analoger Weise aus den bevorzugten Ausführungsformen des erfindungsgemäßen Verfahrens.

Ein nicht beschränkendes Ausführungsbeispiel der Erfindung ist in der Zeichnung dargestellt und wird nachfolgend beschrieben. Es zeigen, jeweils in schematischer Darstellung,
- Fig. 1: eine Anzeigefläche einer Anzeigeeinrichtung, auf der gleichzeitig drei Anzeigefenster dargestellt werden, und
- Fig. 2: die drei Anzeigefenster aus Fig. 1, dargestellt auf einer anderen Anzeigeeinrichtung, deren Anzeigefläche von der Anzeigefläche gemäß Fig. 1 verschieden ist.

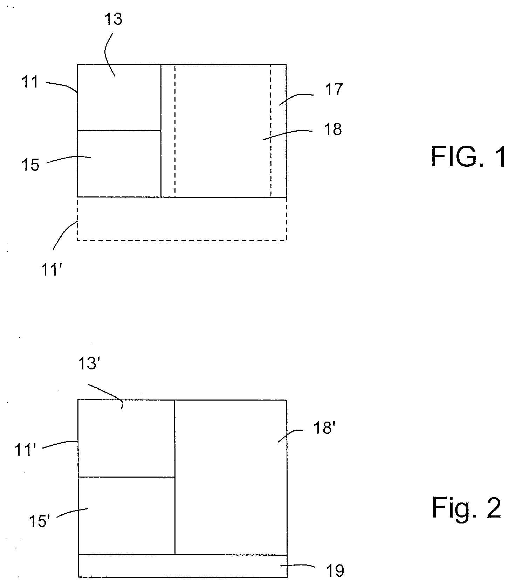

Wie aus Fig. 1 ersichtlich ist, können auf der Anzeigefläche 11 eines Displays einer Ladenwaage, insbesondere an einer Wurst-, Fleisch-, Fisch- und/oder Käsetheke in einem Supermarkt oder in einem Ladengeschäft, nicht nur eichpflichtige Daten wie Gewicht und Preis dargestellt werden, sondern zusätzlich auch digitale Medieninhalte wie Cross-selling-Angebote, Bilder, Videoclips, Inhaltsdeklarationen und dergleichen.

In dem gezeigten Beispiel werden die eichpflichtige Daten in einem Eichfenster 13, Textinhalte in einem Textfenster 15 und Bildinhalte in einem Bildfenster 17 dargestellt. Die eichpflichtigen Daten, die Textinhalte und die Bildinhalte werden im Folgenden als Inhaltselemente bezeichnet. Die jeweiligen Fenster 13, 15, 17 sind, wie auch die Anzeigefläche 11 des Displays selbst, jeweils zumindest im Wesentlichen rechteckig ausgebildet.

Die Abmessungen der Fenster 13, 15, 17 sind in Fig. 1 derart gewählt, dass die jeweiligen Inhaltselemente winkeltreu bzw. verzerrungsfrei auf der Anzeigefläche 11 dargestellt werden. Hierbei wurden z.B. gesetzliche und/oder selbst auferlegte Anforderungen an die Mindestgrößen der Fenster, soweit vorhanden, berücksichtigt. Darüber hinaus sind die Abmessungen und Positionen der Fenster 13, 15, 17 derart gewählt, dass durch die Fenster 13, 15, 17 die Anzeigefläche 11 vollständig ausgenutzt wird. Bei dem Display gemäß Fig. 1 handelt es sich demnach um ein Display, das optimal zur Darstellung der darzustellenden Inhaltselemente geeignet ist.

Darüber hinaus ist in Fig. 1 auch die Anzeigefläche 11' eines Displays eines anderen Herstellers angedeutet, das zumindest teilweise andere Hardware-Parameter, z.B. Größe, Seitenverhältnis, Auflösung, Pixelzahl, Anzahl der Spalten und/oder Anzahl der Zeilen, aufweist, als das erste Display. Im Ergebnis unterscheidet sich die Anzeigefläche 11' von der Anzeigefläche 11 des ersten Displays dadurch, dass sie bei gleicher Breite eine größere Höhe aufweist, wobei die Anzahl der Zeilen (Höhe) der beiden Displays dabei durchaus auch identisch sein kann.

Vor dem Hintergrund eines Multiple Sourcing sollen neben den Displays mit der Anzeigefläche 11 auch die Displays mit der Anzeigefläche 11' mit der vorgenannten Ladenwaage verbaut werden.

Bei Flachbildfernsehern ist es bekannt, immer ein bildschirmfüllendes Vollbild zur Verfügung zu stellen, d.h. in dem vorliegenden Fall würden die Fenster 13, 15, 17 und damit deren Inhaltselemente auf die größere Höhe der Anzeigefläche 11' skaliert, d.h. längs der Höhe gestreckt werden. Hierdurch würde eine verzerrte Darstellung der Fenster 13, 15, 17 bzw. Inhaltselemente resultieren. Alternativ könnte die zusätzliche Höhe der Anzeigefläche 11' gegenüber der Anzeigefläche 11 ungenutzt bleiben.

Um diese beiden nicht optimalen Darstellungen zu vermeiden, umfasst die erfindungsgemäße Ladenwaage einen als Software-Modul ausgebildeten Screen-Editor, der dazu ausgelegt ist, eine optimale Ausnutzung der Anzeigefläche 11' zu berechnen, ohne dabei die Fenster 13, 15, 17 bzw. die zugehörigen Inhaltselemente zu verzerren.

Hierzu sind den darzustellenden Inhaltselementen Zusatzinformationen zugeordnet. In dem vorliegenden Beispiel ist den eichpflichtigen Daten eine bestimmte Mindestgröße und ein bestimmtes Seitenverhältnis des Eichfensters 13 zugeordnet, den Textinhalten ein bestimmtes Seitenverhältnis des Textfelds 15, und den Bilddaten ein relevanter Bildbereich 18 (Fig. 1). Der relevante Bildbereich 18 entspricht dabei demjenigen Teil des Bildinhalts, der bei einer Darstellung auf einem Display der Ladenwaage auf jeden Fall angezeigt werden soll. Auf der Anzeigefläche 11 ist der gesamte Bildbereich des Bildinhalts dargestellt. Die Bildabschnitte links und rechts des relevanten Bildbereichs 18 hingegen werden als nicht relevant angesehen und können bei einer Darstellung auch weggelassen werden.

Basierend auf den vorgenannten, die Darstellung der Inhaltselemente beeinflussenden Hardware-Parameter des Displays mit der Anzeigefläche 11' und basierend auf den Zusatzinformationen der darzustellenden Inhaltselemente berechnet der Screen-Editor dann die optimale Ausnutzung der Anzeigefläche 11' bei gleichzeitig verzerrungsfreier Darstellung. Die für die Berechnung erforderlichen Algorithmen liegen im Griffbereich des auf dem vorliegenden Fachgebiet tätigen Fachmanns. Die berechneten Anzeigefenster können dann auf dem Display bzw. allgemein, auf der Anzeigeeinrichtung, dargestellt werden.

Das Ergebnis dieser Berechnung und die entsprechende Darstellung der Inhaltselemente ist in Fig. 2 gezeigt. Gemäß den Vorgaben der Zusatzinformation zu den eichpflichtigen Daten und gemäß den Vorgaben der Zusatzinformation zu dem Textinhalt sind das Eichfenster 13' und das Textfenster 15' gegenüber der Darstellung in Fig. 1 jeweils maßstabsgetreu um 17% vergrößert. Das Bildfenster 18' hingegen ist schmäler und länger als das Bildfenster 17 aus Fig. 1. Das Bildfenster 18' entspricht daher keiner bloßen Vergrößerung des Bildfensters 17 aus Fig. 1. Gleichwohl ist der in dem Bildfenster 18' dargestellte Bildinhalt nicht verzerrt, da die Bildabschnitte links und rechts des relevanten Bildinhalts 18 für die Darstellung auf der Anzeigefläche 11' weggelassen wurden. Letztlich entspricht das Bildfenster 18' einer maßstabsgetreuen Vergrößerung des relevanten Bildbereichs 18 aus Fig. 1 um 17%. Ein Abschnitt 19 der Anzeigefläche 11' bleibt aber trotz der optimierten Darstellung ungenutzt. Die Fläche des Abschnitts 19 ist jedoch Wesentlich kleiner als die Fläche, die sich durch die zusätzliche Höhe der Anzeigefläche 11' gegenüber der Anzeigefläche 11 ergibt.

Bei einer Waage, die - insbesondere innerhalb einer Baureihe - mit verschiedenen Anzeigeeinrichtungen versehen werden kann, oder bei anderen Vorrichtungen mit Anzeigeeinrichtung ermöglicht die vorliegende Erfindung demnach eine für alle Anzeigeeinrichtungen flächenoptimierte und gleichzeitig verzerrungsfreie Darstellung.

### Bezugszeichenliste

- 11, 11': Anzeigefläche
- 13, 13': Eichfenster
- 15, 15': Textfenster
- 17: Bildfenster
- 18: relevanter Bildinhalt
- 18': Bildfenster
- 19: Abschnitt einer Anzeigefläche

## Patentansprüche

1. Verfahren zur Darstellung von Inhaltselementen in zugeordneten Anzeigefenstern (13, 13', 15, 15', 17, 18') auf einer Anzeigeeinrichtung (11, 11') einer Waage,
**dadurch gekennzeichnet,**
**dass** bei dem Verfahren
- die Darstellung der Inhaltselemente auf der Anzeigeeinrichtung (11, 11') beeinflussende Hardware-Parameter der Anzeigeeinrichtung (11, 11') ausgelesen werden,
- auf wenigstens ein zu einem jeweiligen Zeitpunkt in einem jeweiligen Anzeigefenster (13, 13', 15, 15', 17, 18') auf der Anzeigeeinrichtung (11, 11') darzustellendes Inhaltselement, dem eine jeweilige, die jeweilige Darstellung zumindest teilweise vorgebende Zusatzinformation zugeordnet ist, zugegriffen wird, und
- basierend auf den Hardware-Parametern und der jeweiligen Zusatzinformation unter der Maßgabe einer verzerrungsfreien Darstellung des jeweiligen Inhaltselements auf der Anzeigeeinrichtung (11, 11') die absoluten Abmessungen des dem jeweiligen darzustellenden Inhaltselements zugeordneten Anzeigefensters (13, 13', 15, 15', 17, 181 automatisch berechnet werden, wobei unter den absoluten Abmessungen des jeweiligen Anzeigefensters die Länge der Seiten des jeweiligen Anzeigefensters, d.h. die tatsächliche Ausdehnung des jeweiligen Anzeigefensters auf der Anzeigeeinrichtung, zu verstehen ist.

2. Verfahren nach Anspruch 1,
**dadurch gekennzeichnet ,**
**dass** die Hardware-Parameter die Größe, das Seitenverhältnis, die Auflösung, die Pixelzahl, die Anzahl der Spalten und/oder die Anzahl der Zeilen der Anzeigeeinrichtung (11, 11') umfassen.

3. Verfahren nach Anspruch 1 oder 2,
**dadurch gekennzeichnet ,**
**dass** die Inhaltselemente die Klassen eichpflichtige Inhalte, Textinhalte und/oder Bildinhalte umfassen.

4. Verfahren nach Anspruch 3,
**dadurch gekennzeichnet ,**
**dass** die Inhaltselemente zumindest einiger Klassen als Dateien vorliegen.

5. Verfahren nach zumindest einem der vorstehenden Ansprüche, **dadurch gekennzeichnet ,**
**dass** die jeweilige Zusatzinformation zumindest eines der Attribute Mindestgröße des zugeordneten Anzeigefensters (13, 13', 15, 15', 17, 18'), Seitenverhältnis des zugeordneten Anzeigefensters (13, 13', 15, 15', 17, 18') und/oder relevanter Bildbereich (18) des Inhaltselements umfasst.

6. Verfahren nach zumindest einem der vorstehenden Ansprüche, **dadurch gekennzeichnet ,**
**dass** die Zusatzinformationen der Inhaltselemente einer jeweiligen Klasse gleiche Attribute umfassen.

7. Verfahren nach zumindest einem der vorstehenden Ansprüche, **dadurch gekennzeichnet ,**
**dass** ein relevanter Bildbereich (18) eines Bildinhalts weniger Bildpunkte und/oder ein anderes Seitenverhältnis besitzt als der gesamte Bildbereich des Bildinhalt, wobei insbesondere zumindest der relevante Bildbereich (18) in dem zugehörigen Anzeigefenster (13, 13', 15, 15', 17, 18') dargestellt wird.

8. Verfahren nach zumindest einem der vorstehenden Ansprüche, **dadurch gekennzeichnet ,**
**dass** zu einem jeweiligen Zeitpunkt mehrere Inhaltselemente in ihren jeweiligen Anzeigefenstern (13, 13', 15, 15', 17, 18') gleichzeitig auf der Anzeigeeinrichtung (11, 11') dargestellt werden.

9. Verfahren nach zumindest einem der vorstehenden Ansprüche, **dadurch gekennzeichnet ,**
**dass** die Zusatzinformationen manuell eingegeben und/oder automatisch ermittelt werden.

10. Verfahren nach Anspruch 9,
**dadurch gekennzeichnet ,**
**dass** die automatische Ermittlung durch eine Bilderkennung erfolgt.

11. Verfahren nach zumindest einem der vorstehenden Ansprüche, **dadurch gekennzeichnet ,**
**dass** die jeweilige Zusatzinformation in einer Datenbank, in einer dem Inhaltselement entsprechenden Datei oder in einem Dateinamen einer dem Inhaltselement entsprechenden Datei hinterlegt wird.

12. Verfahren nach zumindest einem der vorstehenden Ansprüche, **dadurch gekennzeichnet ,**
**dass** bei mehreren zu einem jeweiligen Zeitpunkt gleichzeitig darzustellenden Inhaltselementen eine manuelle Anordnung der den Inhaltselementen zugeordneten Anzeigefenster (13, 13', 15, 15', 17, 18') relativ zueinander vorgenommen wird.

13. Computerprogramm mit Programmcode-Mitteln, um das Verfahren nach zumindest einem der Ansprüche 1 bis 12 durchzuführen, wenn das Programm auf einem Computer, insbesondere einer Waage, ausgeführt wird.

14. Computerprogrammprodukt mit Programmcode-Mitteln, die auf einem computerlesbaren Datenträger gespeichert sind, um das Verfahren nach zumindest einem der Ansprüche 1 bis 12 durchzuführen, wenn das Programm auf einem Computer, insbesondere einer Waage, ausgeführt wird.

15. Waage, insbesondere Ladenwaage, zur Darstellung von Inhaltselementen in zugeordneten Anzeigefenstern (13, 13', 15, 15', 17, 18') auf einer Anzeigeeinrichtung (11, 11') der Waage,
**dadurch gekennzeichnet ,**
**dass** die Waage dazu ausgelegt ist,
- die Darstellung der Inhaltselemente auf der Anzeigeeinrichtung (11, 11') beeinflussende Hardware-Parameter der Anzeigeeinrichtung (11, 11') auszulesen,
- auf wenigstens ein zu einem jeweiligen Zeitpunkt in einem jeweiligen Anzeigefenster (13, 13', 15, 15', 17, 18') auf der Anzeigeeinrichtung (11, 11') darzustellendes Inhaltselement, dem eine jeweilige, die jeweilige Darstellung zumindest teilweise vorgebende Zusatzinformation zugeordnet ist, zuzugreifen, und
- basierend auf den Hardware-Parametern und der jeweiligen Zusatzinformation unter der Maßgabe einer verzerrungsfreien Darstellung des jeweiligen Inhaltselements auf der Anzeigeeinrichtung (11, 11') die absoluten Abmessungen des dem jeweiligen darzustellenden Inhaltselements zugeordneten Anzeigefensters (13, 13', 15, 15', 17, 18') automatisch zu berechnen, wobei unter den absoluten Abmessungen des jeweiligen Anzeigefensters die Länge der Seiten des jeweiligen Anzeigefensters, d.h. die tatsächliche Ausdehnung des jeweiligen Anzeigefensters auf der Anzeigeeinrichtung, zu verstehen ist.

## Claims

1. A method of representing content elements in associated display windows (13, 13', 15, 15', 17, 18') on a display device (11, 11') of a scale,
**characterized in that**,
in the method,
- hardware parameters of the display device (11, 11') which influence the representation of the content elements on the display device (11, 11') are read out,
- at least one content element is accessed which is to be represented at a respective point in time in a respective display window (13, 13', 15, 15', 17, 18') on the display device (11, 11') and with which respective additional information is associated that at least partly predefines the respective representation, and
- the absolute dimensions of the display window (13, 13', 15, 15', 17, 18') associated with the respective content element to be represented are automatically calculated based on the hardware parameters and the respective additional information under the condition of a distortion-free representation of the respective content element on the display device (11, 11'), wherein the absolute dimensions of the respective display window are to be understood as the length of the sides of the respective display window, i.e. the actual extent of the respective display window on the display device.

2. A method in accordance with claim 1,
**characterized in that**
the hardware parameters comprise the size, the aspect ratio, the resolution, the pixel number, the number of columns and/or the number of rows of the display device (11, 11').

3. A method in accordance with claim 1 or claim 2,
**characterized in that**
the content elements comprise the classes contents subject to calibration, text contents and/or image contents.

4. A method in accordance with claim 3,
**characterized in that**
the content elements of at least some classes are present as files.

5. A method in accordance with at least one of the preceding claims, **characterized in that**
the respective additional information comprises at least one of the attributes minimum size of the associated display window (13, 13', 15, 15', 17, 18'), aspect ratio of the associated display window (13, 13', 15, 15', 17, 18') and/or relevant image region (18) of the content element.

6. A method in accordance with at least one of the preceding claims, **characterized in that**
the additional information of the content elements of a respective class comprise the same attributes.

7. A method in accordance with at least one of the preceding claims, **characterized in that**
a relevant image region (18) of an image content has fewer pixels and/or a different aspect ratio than the entire image region of the image content, with in particular at least the relevant image region (18) being represented in the associated display window (13, 13', 15, 15', 17, 18').

8. A method in accordance with at least one of the preceding claims, **characterized in that**,
at a respective point in time, a plurality of content elements are simultaneously represented in their respective display windows (13, 13', 15, 15', 17, 18') on the display device (11, 11').

9. A method in accordance with at least one of the preceding claims, **characterized in that**
the additional information is manually entered and/or automatically determined.

10. A method in accordance with claim 9,
**characterized in that**
the automatic determination takes place by an image recognition.

11. A method in accordance with at least one of the preceding claims, **characterized in that**
the respective additional information is stored in a database, in a file corresponding to the content element or in a file name of a file corresponding to the content element.

12. A method in accordance with at least one of the preceding claims, **characterized in that**,
in the case of a plurality of content elements to be simultaneously represented at a respective point in time, a manual arrangement of the display windows (13, 13', 15, 15', 17, 18') associated with the content elements is performed relative to one another.

13. A computer program having program code means to carry out the method in accordance with at least one of the claims 1 to 12 when the program is executed on a computer, in particular a scale.

14. A computer program product having program code means which are stored on a computer-readable data carrier to carry out the method in accordance with at least one of the claims 1 to 12 when the program is executed on a computer, in particular a scale.

15. A scale, in particular a store scale, for representing content elements in associated display windows (13, 13', 15, 15', 17, 18') on a display device (11, 11') of the scale,
**characterized in that**
the scale is designed
- to read out hardware parameters of the display device (11, 11') which influence the representation of the content elements on the display device (11, 11'),
- to access at least one content element which is to be represented at a respective point in time in a respective display window (13, 13', 15, 15', 17, 18') on the display device (11, 11') and with which respective additional information is associated that at least partly predefines the respective representation, and,
- to automatically calculate the absolute dimensions of the display window (13, 13', 15, 15', 17, 18') associated with the respective content element to be represented based on the hardware parameters and the respective additional information under the condition of a distortion-free representation of the respective content element on the display device (11, 11'), wherein the absolute dimensions of the respective display window are to be understood as the length of the sides of the respective display window, i.e. the actual extent of the respective display window on the display device.

## Revendications

1. Procédé de représentation d'éléments de contenu dans des fenêtres d'affichage associées (13, 13', 15, 15', 17, 18') sur un dispositif d'affichage (11, 11') d'une balance,
**caractérisé en ce que**
dans ledit procédé
- on lit des paramètres matériels du dispositif d'affichage (11, 11'), qui influencent la représentation des éléments de contenu sur le dispositif d'affichage (11, 11'),
- on accède à au moins un élément de contenu à représenter à un moment donné dans une fenêtre d'affichage respective (13, 13', 15, 15', 17, 18') sur le dispositif d'affichage (11, 11'), élément auquel est associée une information supplémentaire respective qui définit au moins partiellement la représentation respective, et
- sur la base des paramètres matériels et de l'information supplémentaire respective, les dimensions absolues de la fenêtre d'affichage (13, 13', 15, 15', 17, 18') associée à l'élément de contenu respectif à représenter sont calculées automatiquement, sous réserve d'une représentation sans distorsion de l'élément de contenu respectif sur le dispositif d'affichage (11, 11'), les dimensions absolues de la fenêtre d'affichage respective s'entendant comme la longueur des côtés de la fenêtre d'affichage respective, c'est-à-dire l'extension réelle de la fenêtre d'affichage respective sur le dispositif d'affichage.

2. Procédé selon la revendication 1,
**caractérisé en ce que**
les paramètres matériels incluent la taille, le rapport d'aspect, la résolution, le nombre de pixels, le nombre de colonnes et/ou le nombre de lignes du dispositif d'affichage (11, 11').

3. Procédé selon la revendication 1 ou 2,
**caractérisé en ce que**
les éléments de contenu incluent les classes que sont les contenus soumis à la vérification obligatoire, les contenus textuels et/ou les contenus d'image.

4. Procédé selon la revendication 3,
**caractérisé en ce que**
les éléments de contenu d'au moins certaines classes se présentent sous forme de fichiers.

5. Procédé selon l'une au moins des revendications précédentes,
**caractérisé en ce que**
l'information supplémentaire respective inclut au moins l'un des attributs que sont la taille minimale de la fenêtre d'affichage associée (13, 13', 15, 15', 17, 18'), le rapport d'aspect de la fenêtre d'affichage associée (13, 13', 15, 15', 17, 18') et/ou la zone d'image pertinente (18) de l'élément de contenu.

6. Procédé selon l'une au moins des revendications précédentes,
**caractérisé en ce que**
les informations supplémentaires des éléments de contenu d'une classe respective incluent les mêmes attributs.

7. Procédé selon l'une au moins des revendications précédentes,
**caractérisé en ce que**
une zone d'image pertinente (18) d'un contenu d'image possède moins de points d'image et/ou un autre rapport d'aspect que toute la zone d'image du contenu d'image, en particulier, au moins la zone d'image pertinente (18) étant représentée dans la fenêtre d'affichage correspondante (13, 13', 15, 15', 17, 18').

8. Procédé selon l'une au moins des revendications précédentes,
**caractérisé en ce que**
à un moment donné, plusieurs éléments de contenu sont représentés simultanément dans leurs fenêtres d'affichage respectives (13, 13', 15, 15', 17, 18') sur le dispositif d'affichage (11, 11').

9. Procédé selon l'une au moins des revendications précédentes,
**caractérisé en ce que**
les informations supplémentaires sont saisies manuellement et/ou déterminées automatiquement.

10. Procédé selon la revendication 9,
**caractérisé en ce que**
la détermination automatique s'effectue par une reconnaissance d'image.

11. Procédé selon l'une au moins des revendications précédentes,
**caractérisé en ce que**
l'information supplémentaire respective est enregistrée dans une base de données, dans un fichier correspondant à l'élément de contenu ou dans un nom de fichier d'un fichier correspondant à l'élément de contenu.

12. Procédé selon l'une au moins des revendications précédentes,
**caractérisé en ce que**
dans le cas de plusieurs éléments de contenu à afficher simultanément à un moment donné, on procède à un placement manuel des fenêtres d'affichage (13, 13', 15, 15', 17, 18'), associées aux éléments de contenu, les unes par rapport aux autres.

13. Programme informatique comprenant des moyens de code de programme pour mettre en oeuvre le procédé selon l'une au moins des revendications 1 à 12, lorsque le programme est exécuté sur un ordinateur, en particulier sur une balance.

14. Produit de programme informatique comprenant des moyens de code de programme, stockés sur un support de données lisible par ordinateur, pour mettre en oeuvre le procédé selon l'une au moins des revendications 1 à 12, lorsque le programme est exécuté sur un ordinateur, en particulier sur une balance.

15. Balance, en particulier balance de magasin, pour représenter des éléments de contenu dans des fenêtres d'affichage associées (13, 13', 15, 15', 17, 18') sur un dispositif d'affichage (11, 11') de la balance,
**caractérisée en ce que**
la balance est conçue pour
- lire les paramètres matériels du dispositif d'affichage (11, 11'), qui influencent la représentation des éléments de contenu sur le dispositif d'affichage (11, 11'),
- accéder à au moins un élément de contenu à représenter à un moment donné dans une fenêtre d'affichage respective (13, 13', 15, 15', 17, 18') sur le dispositif d'affichage (11, 11'), élément auquel est associée une information supplémentaire respective qui définit au moins partiellement la représentation respective, et
- sur la base des paramètres matériels et de l'information supplémentaire respective, calculer automatiquement les dimensions absolues de la fenêtre d'affichage (13, 13', 15, 15', 17, 18') associée à l'élément de contenu respectif à représenter, sous réserve d'une représentation sans distorsion de l'élément de contenu respectif sur le dispositif d'affichage (11, 1 1'), les dimensions absolues de la fenêtre d'affichage respective s'entendant comme la longueur des côtés de la fenêtre d'affichage respective, c'est-à-dire l'extension réelle de la fenêtre d'affichage respective sur le dispositif d'affichage.
